# EUROPEAN PATENT APPLICATION

(11) **EP 3 982 453 A1**
(43) Date of publication of application: **13.04.2022**
(21) Application number: 20821663.0
(22) Date of filing: 04.06.2020
(51) Int. Cl.: H01M 10/42, G06Q 10/00

(54) **COMPONENT REPLACEMENT METHOD AND COMPONENT REPLACEMENT SYSTEM**

(30) Priority: 10.06.2019 JP 2019108136
(71) Applicant: Panasonic Intellectual Property Management Co., Ltd., Osaka-shi, Osaka 540-6207 (JP)
(72) Inventor: KAMIJIMA, Junya, Osaka-shi, Osaka (JP)
(74) Representative: Grünecker Patent- und Rechtsanwälte PartG mbB
(86) International application number: PCT/JP2020/022162
(87) International publication number: WO 2020/250807

(57) **Abstract**

The present disclosure discloses a component replacement method and a component replacement system that require less labor of a user and are lower in cost as compared with the prior art. This component replacement method comprises steps of: collecting a component log of the component; predicting replacement time of the component based on the component log that has been collected; ordering a new component at the replacement time that has been predicted, and storing the new component that has been delivered as an inventory; making, by the user, a request for component replacement when the component degrades or fails; and delivering, to the user, the component that has been added to the inventory in response to the request from the user.

## Description

### TECHNICAL FIELD

The present disclosure relates to a component replacement method and a component replacement system for a component of an electronic device.

### BACKGROUND ART

For example, Patent Document 1 discloses a battery management module for managing a secondary use destination of a battery in use by using information of the battery. The battery management module of Patent Document 1 includes a use end time prediction means for acquiring degradation estimation information of a battery in use and predicting use end time of the battery in use based on the degradation estimation information that has been acquired, and a secondary use destination determination means for determining a secondary use destination of the battery in use in advance before end of use based on the use end time that has been predicted.

### CITATION LIST

### PATENT LITERATURE

Patent Document 1: WO 2015/012144 A

### SUMMARY OF INVENTION

### TECHNICAL PROBLEM

In a conventional component replacement service, when a component of an electronic device fails or degrades and needs to be replaced, a user issues a replacement request to a provider, and the provider replaces a battery. However, in the conventional component replacement service, it is necessary for the user to actively take an action such as using an application that measures SOH (State of Health, ratio of full charge capacity to design capacity) of a battery and transmitting the measured SOH to a server of the provider, and convenience is not high. In addition, in order to promptly replace the battery in response to an unexpected failure or the like, the provider needs to store a sufficient number of stocks, and there is a problem that the cost increases due to maintenance cost or the like.

The present disclosure provides a component replacement method or the like that requires less labor of a user and is lower in cost as compared with the prior art.

### SOLUTION TO PROBLEM

A component replacement method according to an aspect of the present disclosure includes the steps of: collecting a component log of a component; predicting replacement time of the component based on the component log that has been collected; ordering a new component at the replacement time that has been predicted and storing the new component that has been delivered as an inventory; making, by the user, a request for component replacement when the component degrades or fails; and delivering, to the user, the component that has been added to the inventory in response to the request from the user.

In addition, a component replacement system according to an aspect of the present disclosure includes: a component log management server that collects a component log of a component; a component log analysis unit that predicts replacement time of the component based on the component log that has been collected; and an inventory warehouse management server that orders a new component at the replacement time that has been predicted, manages the new component that has been delivered as an inventory, and arranges to deliver the new component to a user in response to a component replacement request made by the user when the component degrades or fails.

### ADVANTAGEOUS EFFECTS OF INVENTION

According to the component replacement method and the like of the present disclosure, it is possible to perform component replacement at lower cost with less labor of a user as compared with the prior art.

### BRIEF DESCRIPTION OF DRAWINGS

FIG. 1 is a block diagram illustrating a configuration example of a component replacement system 1 according to embodiment 1.
FIG. 2 is a table illustrating a data configuration example of a battery log database 217 of FIG. 1.
FIG. 3 is a flowchart illustrating an operation example of battery replacement of the component replacement system 1 of FIG. 1.
FIG. 4 is a block diagram illustrating a configuration example of a component replacement system 2 according to embodiment 2.
FIG. 5 is a graph illustrating a configuration example of a neural network 218 included in a battery log AI analysis unit 211A of FIG. 4.

### DESCRIPTION OF EMBODIMENTS

### [EMBODIMENT 1]

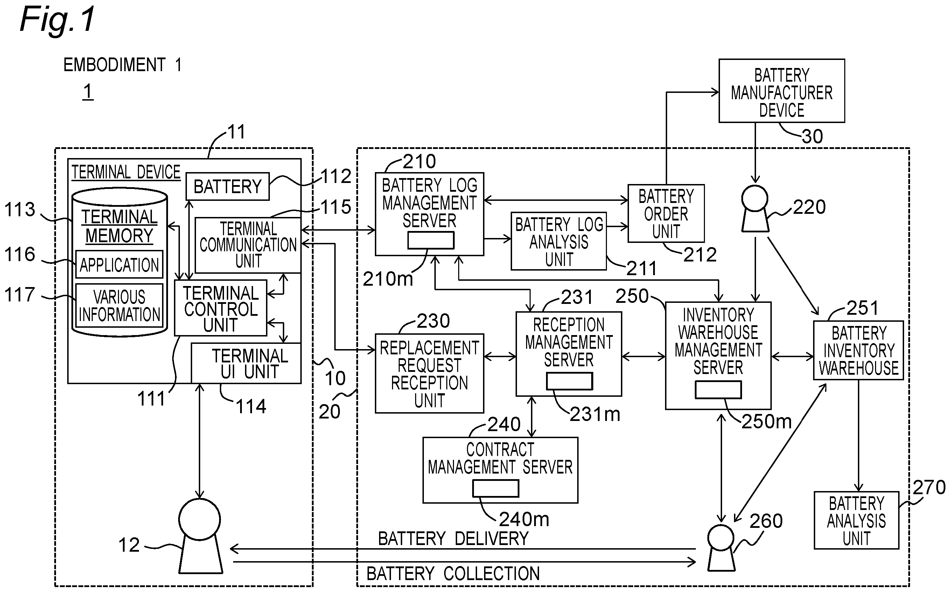

FIG. 1 is a block diagram illustrating a configuration example of a component replacement system 1 according to embodiment 1. In FIG. 1, the component replacement system 1 includes a user group 10, a service provider group 20, and a battery manufacturer device 30. The user group 10 includes a terminal device 11 and a user 12.

In FIG. 1, the terminal device 11 is a terminal device such as a laptop computer used by the user 12, and includes a terminal control unit 111, a battery 112, a terminal memory 113, a terminal user interface unit 114 (hereinafter abbreviated as "terminal UI unit"), and a terminal communication unit 115. The terminal control unit 111 reads and executes an application software 116 stored in the terminal memory 113 to control operation of the terminal device 11. The battery 112 is a battery that supplies power to each unit of the terminal device 11, and is an example of a "component of an electronic device" of the present disclosure. The terminal memory 113 includes, for example, a storage device such as a hard disk drive or a solid state memory, and stores the application software 116 read and executed by the terminal control unit 111 and various types of information 117 regarding the terminal device 11 including the product number or the like of the terminal device 11. The terminal UI unit 114 is a user interface that presents various types of information to the user 12 in response to a command from the terminal control unit 111 and receives an operation of the user 12 to input the operation to the terminal control unit 111. The terminal UI unit 114 is, for example, a display and a keyboard, or the like. The terminal communication unit 115 transmits and receives information to and from a battery log management server 210 and a replacement request reception unit 230 via a remote communication means (not illustrated) such as a network.

The service provider group 20 is a device group for providing a battery delivery service to the user 12. The service provider group 20 includes the battery log management server 210, a battery log analysis unit 211, a battery order unit 212, the replacement request reception unit 230, a reception management server 231, a contract management server 240, an inventory warehouse management server 250, a battery inventory warehouse 251, a battery courier 260 and a battery analysis unit 270. The battery log management server 210, the reception management server 231, the contract management server 240 and the inventory warehouse management server 250 include database memories 210m, 231m, 240m and 250m, respectively.

The battery log management server 210 is a server device that has a battery log database 217 in the database memory 210m, and stores and accumulates a battery log transmitted from the terminal device 11. It is noted that the battery log is data including information such as the product number of the battery 112, the product number of the terminal device 11, manufacturing numbers (serial numbers) of the battery 112 and the terminal device 11, the cycle count of the battery 112 and SOH (State of Health, battery health state) etc., and replacement time indicating a date or a time point when the battery is replaced. The battery log is an example of a "component log" of the present disclosure. In the present disclosure, the SOH of the battery 112 refers to a ratio of a current full charge capacity to a design capacity. However, in case where the battery has not been replaced yet, the replacement time of the battery is data indicating that the battery has not been replaced.

The battery log analysis unit 211 reads the battery log of the database memory 210m, performs a statistical process (as described below), and predicts and outputs the next replacement time of the battery 112. When the predicted replacement time approaches, the battery order unit 212 transmits a request to the battery log management server 210 to acquire information of the battery 112, and orders a new battery to the battery manufacturer device 30. A battery recipient 220 stores the new battery delivered by the battery manufacturer device 30 in the battery inventory warehouse 251.

The replacement request reception unit 230 is an interface device that receives a replacement request for the battery 112 from the terminal device 11 and transmits the replacement request to the reception management server 231. The reception management server 231 processes the battery replacement request input via the replacement request reception unit 230 while transmitting and receiving necessary information to and from the contract management server 240, and instructs the inventory warehouse management server 250 to deliver the battery 112. The inventory warehouse management server 250 is a server device that manages the inventory status or the like of the battery inventory warehouse 251. The inventory warehouse management server 250 instructs the battery courier 260 to deliver the same battery 112 as that used in the terminal device 11 based on information of the terminal device 11 included in the replacement request. The battery inventory warehouse 251 is a warehouse that stores a new battery delivered from the battery manufacturer device 30 as an inventory. The battery courier 260 takes out a battery from the battery inventory warehouse, delivers the battery to the user 12, and collects a used battery 112 from the user 12. The battery analysis unit 270 analyzes the battery 112 which has degraded earlier than predicted or whose failure is detected in the terminal device 11 among the used batteries that have been collected, and investigates the cause of the degradation or the failure.

The terminal control unit 111 prompts the user to replace the battery via the terminal UI unit 114. In response to that, the user 12 transmits a battery replacement request to the replacement request reception unit 230 via the terminal device 11. The reception management server 231 that has received the replacement request via the replacement request reception unit 230 inquires of the contract management server 240 whether or not the user 12 who has made the replacement request has registered for a replacement service. If the user 12 has not registered for the service, the reception management server 231 returns the fact to the terminal device 11. If the user 12 has registered for the replacement service, the reception management server 231 instructs the inventory warehouse management server 250 to deliver a new battery. The inventory warehouse management server 250 manages the number or the like of batteries stored in the battery inventory warehouse 251. The battery manufacturer device 30 is, for example, a device of an electronic device manufacturer that receives an order of a battery and delivers a new battery.

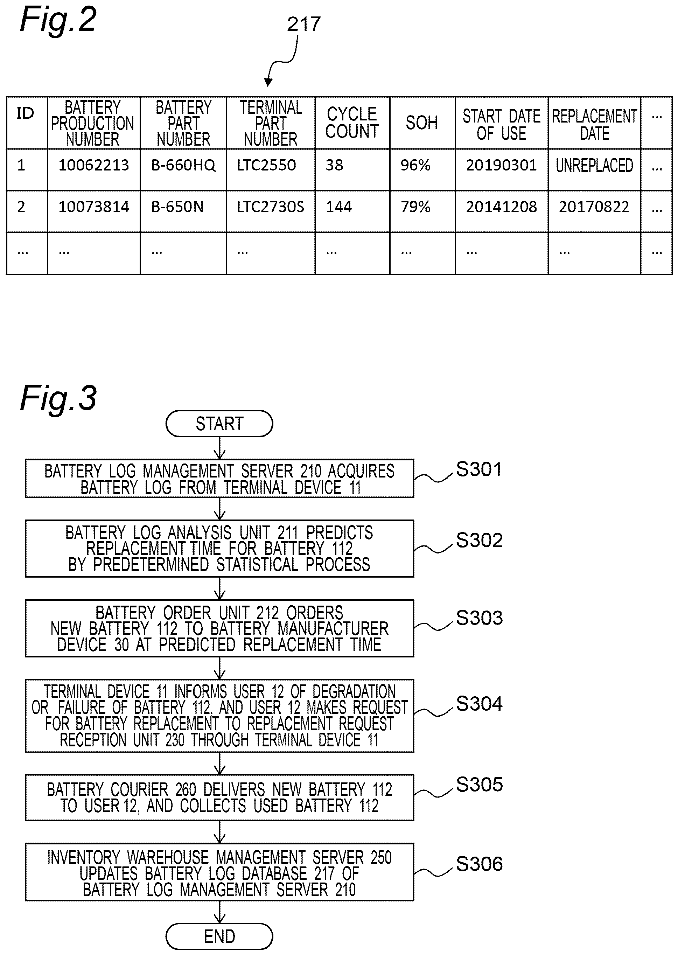

FIG. 2 is a table illustrating a data configuration example of the battery log database 217 included in the battery log management server 210 of FIG. 1. As illustrated in FIG. 2, the battery log database 217 stores, for all the batteries that have been registered, the product number of the terminal in which the battery is used (terminal product number), the number of times that the battery is charged and discharged (cycle count), the SOH of the battery, etc. The battery log database 217 further stores a date and time when the battery is replaced with another battery (replacement date). A battery in a row with a replacement date "unreplaced" indicates that the battery is still in use without being replaced. "ID" in FIG. 2 is a serial number of a row in the database.

Operation of the component replacement system 1 configured as described above will be described below.

FIG. 3 is a flowchart illustrating an example of battery replacement operation of the component replacement system 1 of FIG. 1. In the battery replacement operation of FIG. 3, the battery log analysis unit 211 predicts in advance that the battery 112 will degrade and will need to be replaced, and orders a new battery 112 in advance through the battery order unit 212 to add the new battery to the inventory. Thereafter, when the terminal device 11 detects degradation of the battery 112, the terminal device 11 notifies the user 12 that the battery needs to be replaced. The user 12 transmits a battery replacement request via the terminal device 11 and the replacement request reception unit 230, and the battery courier 260 delivers the new battery 112 and collects the used battery 112.

Degradation of the battery 112 is detected by a decrease in the full charge capacity of the battery. That is, when the value of SOH indicating the ratio of the full charge capacity to the design capacity falls below a predetermined value such as 80%, it is determined that the battery has degraded and needs to be replaced.

In FIG. 3, the battery replacement operation includes steps S301 to S306. In the step S301 of FIG. 3, the terminal control unit 111 acquires necessary information from the battery 112 and the terminal memory 113 to generate a battery log, and transmits the battery log to the battery log management server 210 through the terminal communication unit 115. The battery log management server 210 stores the battery log received from the terminal device 11 in the battery log database 217. By periodically repeating this, a number of battery logs are collected in the battery log database 217 of the server device 21.

In the step S302, the battery log analysis unit 211 performs a predetermined statistical process, such as obtaining an average value of the number of use days from start of use to replacement in a plurality of terminal devices 11, on the battery logs accumulated in the battery log database 217 to analyze the battery logs, and predicts replacement time at which the battery 112 needs to be replaced.

In the step S303, when the time until the predicted replacement time of the battery 112 falls below a predetermined value (for example, 30 days), the battery order unit 212 orders a battery to the battery manufacturer device 30. The battery manufacturer device 30 receives an order for the battery and delivers a new battery 112 to the battery recipient 220. The battery recipient 220 stores the new battery 112 in the battery inventory warehouse, and reflects the change in the inventory status in the inventory warehouse management server 250. It is noted that, in case where it is determined that it is not necessary to order a new battery 112 because, for example, a sufficient number of new batteries 112 are already stored in the battery inventory warehouse, the battery order unit 212 may not order a battery.

In the step S304, the terminal control unit 111 detects that the battery 112 has degraded or a failure has occurred in the battery 112, and notifies the user 12 that it is necessary to replace the battery 112, for example, by displaying a pop-up window on the terminal UI unit 114. In response to the notification, the user 12 transmits a battery replacement request to the replacement request reception unit 230 through the terminal device 11. The battery replacement request includes a product number of the battery 112, identification information of the user 12, and the like.

In the step S305, the reception management server 231 that has received the battery replacement request through the replacement request reception unit 230 inquires of the contract management server 240 and checks whether the user 12 who has made the battery replacement request has registered for the battery replacement service. If the user 12 has registered for the battery replacement service, the reception management server 231 instructs the inventory warehouse management server 250 to deliver the new battery 112 and collect the used battery 112. In response to this, the inventory warehouse management server 250 causes the battery courier 260 to deliver the new battery 112 that has been stored to the user 12 and to collect the used battery 112. In addition, the inventory warehouse management server 250 reflects a change in the inventory status of the battery inventory warehouse 251 due to this.

In the step S306, the inventory warehouse management server 250 directly or indirectly communicates with the battery log management server 210 and the contract management server 240 to update corresponding data. For example, the battery log database 217 of the battery log management server 210 is updated as follows. That is, the current date and time is registered in the "replacement date" in the row corresponding to the used battery 112 in the battery log database 217, and a row including the product number of the new battery, the item number of the new battery, the use start date and time of the battery, etc. is newly added to the battery log database 217. Furthermore, for example, the use history of the battery replacement service is recorded in the contract management server 240.

The battery replacement operation as described above is performed in parallel for the plurality of users 12 (the plurality of terminal devices 11) who have registered for the battery replacement service. By doing so, it is possible to predict the number of new batteries to be required in the future based on the statistical process, and perform order placement and inventory management in consideration of lead time. As a result, it is possible to prevent a new battery from being out of stock when the battery needs to be replaced, or to prevent unnecessary cost from being incurred by having excess inventory. In addition, since the user 12 does not need to actively perform acquisition, transmission, or the like of the battery log, it is possible for the user to replace the battery with less labor.

### [EMBODIMENT 2]

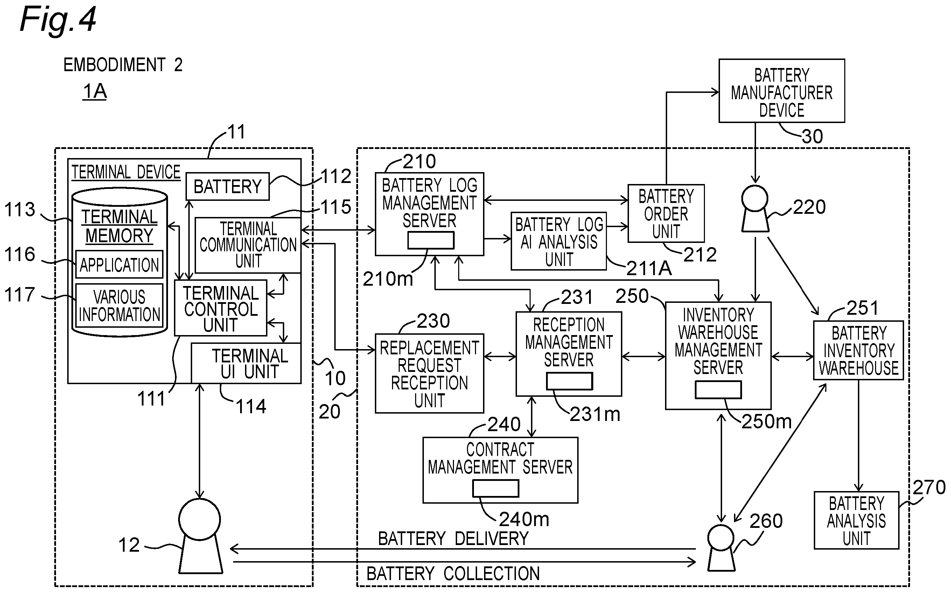

FIG. 4 is a block diagram illustrating a configuration example of a component replacement system 1A according to embodiment 2. In FIG. 4, the component replacement system 1A is different from the component replacement system 1 of FIG. 1 in the following point.
(1) A battery log AI analysis unit 211A is provided in lieu of the battery log analysis unit 211.

In FIG. 4, the battery log AI analysis unit 211A includes a plurality of neural networks 218. The neural networks 218 correspond to values of battery product numbers of batteries 112, respectively. The neural network 218 has learned the past battery log as supervisory data, and when a battery log is input, a predicted value of the replacement time of the battery 112 is output.

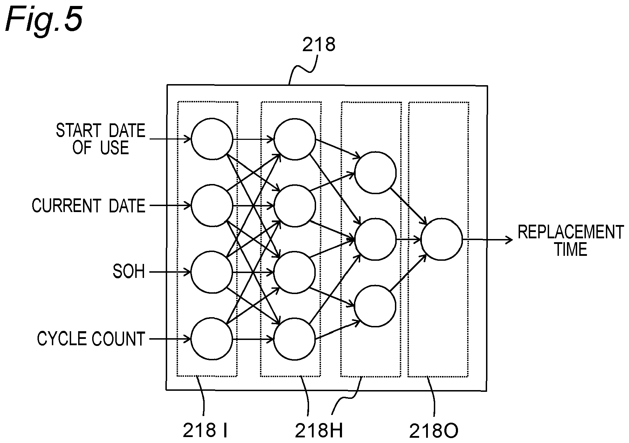

FIG. 5 is a graph illustrating a configuration example of the neural network 218 included in the battery log AI analysis unit 211A of FIG. 4. The neural network 218 is AI (Artificial Intelligence) including one input layer 2181, a plurality of hidden layers 218H, and one output layer 2180. At least two pieces of information included in a battery log transmitted from the terminal device 11, such as the use start date and time of the battery 112, the current date and time, the SOH of the battery 112, the cycle count of the battery 112, etc. are input to the input layer 2181. An input value propagates through the hidden layer 218H according to the weighting of branches included in each layer, and replacement time is output from the output layer 2180. Such a neural network 218 is caused to learn a battery log related to the battery 112 that has already been replaced as supervisory data. The neural network 218 is trained by data in which information such as the use start date and time and the cycle count of the battery 112 is associated with the replacement time of the battery 112. As a result, when each input value is input to the input layer 2181 of the neural network 218, the predicted replacement time is output. Therefore, the replacement time of the battery 112 can be predicted.

Note that the battery log AI analysis unit 211A of FIG. 4 is an example of "analysis unit of learned artificial intelligence" of the present disclosure, and the neural network 218 of FIG. 5 is an example of the "learned artificial intelligence". In addition, the set of four input values illustrated in FIG. 5 is only an example of the set of input values of the neural network 218, and the set of input values of the neural network 218 may be another set of input values.

### [MODIFIED EMBODIMENT]

In embodiments 1 and 2, in lieu of automatically ordering a new battery from the battery manufacturer device 30, the battery order unit 212 may, for example, send to the battery recipient 220 a notification to prompt the battery recipient 220 to order a new battery. In addition, in embodiments 1 and 2, the user 12 may be able to make an inquiry other than a battery replacement request with respect to the battery 112. For example, the reception management server 231 receives an inquiry about a battery log via the replacement request reception unit 230, and the service provider investigates the content of the battery log management server 210 and conveys the investigation result to the user 12.

Furthermore, in the embodiments and the modified embodiment, the battery of the terminal device 11 has been described as an example of a "component of an electronic device". However, the component of the electronic device may be any component as long as degradation of the component can be detected by using some indicator and the component can be replaced. Specifically, for example, degradation of the battery of an electric bicycle can be detected and replaced by using the SOH as an index, or degradation of a hard disk drive can be detected and replaced by using the writing error rate as an indicator. Therefore, the battery log, the battery log management server 210, the battery courier 260, the battery replacement method, and the battery replacement system according to the embodiments are examples of a "component log", a "component log management server", a "component courier", a "component replacement method", and a "component replacement system" of the present disclosure, respectively.

### INDUSTRIAL APPLICABILITY

The component replacement system according to the present disclosure is widely applicable to replacement services for components of electronic devices.

### REFERENCE SINGS LIST

- 1, 1A: Component replacement system
- 10: User group
- 11: Terminal device
- 12: User
- 20: Service provider group
- 30: Battery manufacturer device
- 111: Terminal control unit
- 112: Battery
- 113: Terminal memory
- 114: Terminal UI unit
- 115: Terminal communication unit
- 116: Application software
- 117: Various types of information
- 210: Battery log management server
- 210m: Database memory
- 211: Battery log analysis unit
- 211A: Battery log AI analysis unit
- 212: Battery order unit
- 220: Battery recipient
- 230: Replacement request reception unit
- 231: Reception management server
- 231m: Database memory
- 240: Contract management server
- 240m: Database memory
- 250: Inventory warehouse management server
- 250m: Database memory
- 251: Battery inventory warehouse
- 260: Battery courier
- 270: Battery analysis unit

## Claims

1. A component replacement method of replacing by a service provider a component of an electronic device of a user, the component replacement method comprising steps of:
collecting a component log of the component;
predicting replacement time of the component based on the component log that has been collected;
ordering a new component at the replacement time that has been predicted, and storing the new component that has been delivered as an inventory;
making, by the user, a request for component replacement when the component degrades or fails; and
delivering, to the user, the component that has been added to the inventory in response to the request from the user.

2. The component replacement method according to claim 1, wherein the step of predicting the replacement time predicts the replacement time by performing a predetermined statistical process on data of the component log that has been collected.

3. The component replacement method according to claim 1, wherein the step of predicting the replacement time predicts the replacement time by using data of the component log by an analysis unit of learned artificial intelligence which has learned the component log of a past as supervisory data.

4. The component replacement method according to claim 3, wherein
the component log is data including information on the component and the replacement time of the component, and
the learned artificial intelligence is a neural network in which information on the component is input and the replacement time of the component is output.

5. The component replacement method according to any one of claims 1 to 4, wherein the component of the electronic device is a battery of a rechargeable electronic device.

6. A component replacement system that causes a service provider to replace a component of an electronic device of a user, the component replacement system comprising:
a component log management server that collects a component log of the component;
a component log analysis unit that predicts replacement time of the component based on the component log that has been collected; and
an inventory warehouse management server that orders a new component at the replacement time that has been predicted, manages the new component that has been delivered as an inventory, and arranges to deliver the new component to the user in response to a request for component replacement made by the user when the component degrades or fails.

7. The component replacement system according to claim 6, wherein the component log analysis unit predicts the replacement time by performing a predetermined statistical process on data of the component log that has been collected.

8. The component replacement system according to claim 6, wherein the component log analysis unit predicts the replacement time by using data of the component log by an analysis unit of learned artificial intelligence which has learned the component log of a past as supervisory data.

9. The component replacement system according to claim 8, wherein
the component log is data including information on the component and the replacement time of the component, and
the learned artificial intelligence is a neural network in which information on the component is input and the replacement time of the component is output.

10. The component replacement system according to any one of claims 6 to 9, wherein the component of the electronic device is a battery of a rechargeable electronic device.
